# EUROPEAN PATENT APPLICATION

(11) **EP 1 734 058 A1**
(43) Date of publication of application: **20.12.2006**
(21) Application number: 05105160.5
(22) Date of filing: 13.06.2005
(51) Int. Cl.: C08F 10/00, C08F 4/642

(54) **Ethylene and alpha-olefins polymerisation catalyst system based on fluorenyl ligand**

(71) Applicant: TOTAL PETROCHEMICALS RESEARCH FELUY, 7181 Seneffe (Feluy) (BE)
(72) Inventor: Razavi, Abbas, B-7000, Mons (BE); Bellia, Vincenzo, B-7903, Chapelle-à-oie (BE)
(74) Representative: Leyder, Francis

(57) **Abstract**

The present invention discloses a catalyst system comprising a cyclopentadienyl-fluorenyl-based catalyst component wherein the fluorenyl is at least monosubstituted. It also discloses its method of preparation and its use in the polymerisation of ethylene.

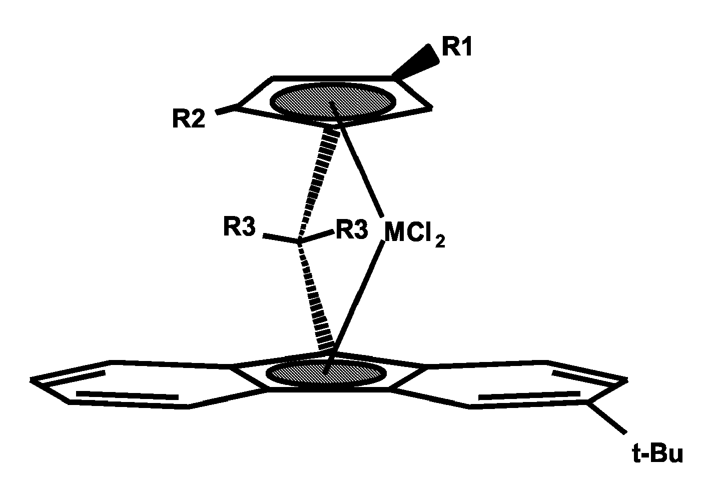

## Description

The present invention relates to a metallocene catalyst component for use in preparing polyolefins. The invention further relates to a catalyst system that incorporates the metallocene catalyst component and a process for preparing polyolefins.

Polyethylene is known for use in the manufacture of a wide variety of articles. The polyethylene polymerisation process can be varied in a number of respects to produce a wide variety of resultant polyethylene resins having different physical properties that render the various resins suitable for use in different applications. Medium density polyethylene resins are known for use in making films. Such medium density films are known to have good resin processability due to the presence of long chain branching in the polyethylene polymer molecules. It is known to produce such resins using chromium-based catalysts, which have been known for some time. Unfortunately, some medium density resins produced by such catalysts suffer from the problem that when the film is to be used for the packaging of foods for human consumption, it is required that the level of extractable or volatile compounds in the polyethylene resin is low so that the food is not inadvertently contaminated. For example, in the United States the Food and Drug Administration has set maximum limits for the amount of extractable or volatile compounds in polyethylene resins for food applications.

It is also known to produce polyethylene in liquid phase loop reactors in which ethylene monomer, and optionally an alpha-olefinic comonomer typically having from 3 to 10 carbon atoms, are circulated under pressure around a loop reactor by a circulation pump. The ethylene monomer and optional comonomer are present in a liquid diluent, such as an alkane, for example isobutane. Hydrogen may also be added to the reactor. A catalyst is also fed to the loop reactor. The catalyst for producing polyethylene may typically comprise a chromium-based catalyst, a Ziegler-Natta catalyst or a metallocene catalyst. The reactants in the diluent and the catalyst are circulated at an elevated polymerisation temperature around the loop reactor thereby producing polyethylene homopolymer or copolymer depending on whether or not a comonomer is present. Either periodically or continuously, part of the reaction mixture, including the polyethylene product suspended as slurry particles in the diluent, together with unreacted ethylene and comonomer, is removed from the loop reactor. Such a process is described for example in EP-A-0905153 that discloses a process for producing high density polyethylene in the presence of a Ziegler-Natta catalyst system in two liquid full loop reactors in series. The reactors are both operated with a liquid diluent, for example isobutane. In a first reactor there is substantially homopolymerisation, optionally with a minor degree of copolymerisation, and hydrogen is introduced into the first reactor to achieve the required homopolymerisation. Copolymerisation is carried out in the second reactor. In order to reduce or prevent hydrogen from entering the second reactor, a hydrogenation catalyst is introduced into the reactants downstream of the first reactor. This process requires the use of an additional hydrogenation catalyst.

The reaction mixture when removed from the loop reactor may be processed to remove the polyethylene product from the diluent and the unreacted reactants, with the diluent and unreacted reactants typically being recycled back into the loop reactor. Alternatively, the reaction mixture may be fed to a second loop reactor serially connected to the first loop reactor where a second polyethylene fraction may be produced. Typically, when two reactors in series are employed in this manner, the resultant polyethylene product, which comprises a first polyethylene fraction produced in the first reactor and a second polyethylene fraction produced in the second reactor, has a bimodal molecular weight distribution.

The homo- or co-polymerisation of ethylene may also be carried out under high pressure of ethylene and optional comonomers by the radical route. This results in a large variety of products which have numerous applications, among which may be mentioned bases for adhesives, in particular hot melt adhesives, bituminous binders, wrapping films, coextrusion, binders, moulded items, and the like.

Processes for the polymerisation of ethylene at high temperatures and pressures by means of free radical initiators have been known for a long time. Ethylene polymers are obtained by homopolymerising ethylene or by copolymerising it with at least one other comonomer in a polymerisation system which operates continuously under pressures of the order of 50 MPa to 500 MPa and at temperatures of between 50 and 300°C. The polymerisation is carried out in continuous tubular reactors or stirred autoclaves in the presence of initiators and optionally of transfer agents. The polymers are subsequently separated from the volatile substances after their departure from the reactor in separators.

It is known that the polymerisation of ethylene in the presence or in the absence of comonomers can result in reaction runaways (see, for example, Chem. Eng. Proc., 1998, 37, 55-59). These runaways are reflected by a very marked rise in the temperature and in the pressure and thus by bursting of the safety devices of the plant. Consequently, the runaway must result in undesired shutdowns in production. It is very desirable to avoid these shutdowns as far as possible and one means for doing this is to carefully control the flow rates of the reactants entering the reactor, in particular the flow rate of the source of radicals, that is to say of the initiator. This is because the injection of an excessively large amount of radicals results in a localised runaway in one of the regions of the reactor, which runaway subsequently spreads very quickly to the whole of the reactor. The content of radicals should not exceed a predetermined threshold in order to avoid runaway of the polymerisation.

It is generally known that radical polymerisations can be controlled using stable free radicals, this control making it possible in particular to obtain polymers exhibiting narrow molecular mass distribution. For example US-A-5,449,724 discloses a radical polymerisation process that consists in heating, at a temperature of from 40°C to 500°C and under a pressure of from 50 MPa to 500 MPa, a mixture composed of a free radical initiator, of a stable free radical and of ethylene, in order to form a thermoplastic resin which has a molecular mass distribution of from 1.0 to 2.0.

Olefins having 3 or more carbon atoms can be polymerised to produce a polymer with an isotactic stereochemical configuration. For example, in the polymerisation of propylene to form polypropylene, the isotactic structure is typically described as having methyl groups attached to the tertiary carbon atoms of successive monomeric units on the same side of a hypothetical plane through the main chain of the polymer. This can be described using the Fischer projection formula as follows:

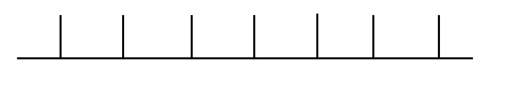

Another way of describing the structure is through the use of NMR spectroscopy. Bovey's NMR nomenclature for an isotactic pentad is ... mmmm with each "m" representing a "meso" diad or successive methyl groups on the same side in the plane.

In contrast to the isotactic structure, syndiotactic polymers are those in which the methyl groups attached to the tertiary carbon atoms of successive monomeric units in the chain lie on alternate sides of the plane of the polymer. Using the Fischer projection formula, the structure of a syndiotactic polymer is described as follows:

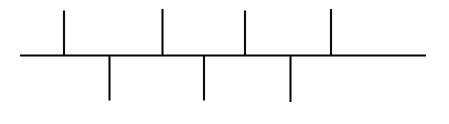

In NMR nomenclature, a syndiotactic pentad is described as ...rrrr... in which "r" represents a "racemic" diad with successive methyl groups on alternate sides of the plane.

In contrast to isotactic and syndiotactic polymers, an atactic polymer exhibits no regular order of repeating unit. Unlike syndiotactic or isotactic polymers, an atactic polymer is not crystalline and forms essentially a waxy product.

While it is possible for a catalyst to produce all three types of polymer, it is desirable for a catalyst to produce predominantly either an isotactic or a syndiotactic polymer with very little atactic polymer. C2-symmetric metallocene catalysts are known in the production of the polyolefins. For example, C2 symmetric bis indenyl type zirconocenes can produce high molecular weight, high melting temperature, isotactic polypropylene. The preparation of this metallocene catalyst is however costly and time-consuming. Most importantly, the final catalyst consists of a mixture of racemic and meso isomers in an often unfavourable ratio. The meso stereoisomer has to be separated to avoid the formation of atactic polypropylene during the polymerisation reaction.

Cs-symmetric metallocene catalysts are known in the production of the syndiotactic polyolefins.

EP-A-0426644 relates to syndiotactic copolymers of olefins such as propylene obtainable using as a catalyst component isopropyl (fluorenyl)(cyclopentadienyl) zirconium dichloride. Syndiotacticity, as measured by the amount of syndiotactic pentads, rrrr was found to be 73-80%.

EP-A-577581 discloses the production of syndiotactic polypropylene using metallocene catalysts which have fluorenyl groups substituted in positions 2 and 7 and an unsubstituted cyclopentadienyl ring.

There is a need to develop new catalyst systems that are able to produce polyethylene or poly-alpha-olefins with ease and safety.

It is an aim of the present invention to provide a catalyst system for the polymerisation of ethylene or alpha-olefins under mild conditions of temperature and pressure.

It is another aim of the present invention to provide a catalyst system for preparing polyethylene or poly-alpha-olefins with controlled long chain branching.

It is a further aim of the present invention to provide a catalyst system for preparing polyethylene with good optical properties.

It is also an aim of the present invention to provide a catalyst system for preparing polyethylene or poly-alpha-olefins having good mechanical properties.

### List of figures.

Figure 1a is a schematic representation of complex R³₂(3-R¹-5-R²-Cp)(6-t-Bu-Flu)MCl₂ and figure 1b is a schematic representation of complex R³₂(3-R¹-5-R²-Cp)(3-t-Bu-Flu)MCl₂ according to the present invention.
Figure 2 represents the scheme for preparing complex R³₂(3-R¹-5-R²-Cp)(3-t-Bu-Flu)MCl₂.

Accordingly, the present invention discloses a catalyst system for homo- or co-polymerising ethylene and/or alpha-olefins based on a catalyst component of general formula I

R" (CpR¹R² R³)(FluR'ₘ)MQ₂ (I)

wherein Cp is a cyclopentadienyl ring,
wherein R¹ is H or a substituent on the cyclopentadienyl ring which is distal to the bridge, which distal substituent comprises a group of the formula XR*₃ in which X is chosen from Group 14 of the periodic table, and each R* is the same or different and chosen from hydrogen or hydrocarbyl of from 1 to 20 carbon atoms,
wherein R² is H or a substituent on the cyclopentadienyl ring which is proximal to the bridge and positioned non-vicinal to the distal substituent and is of the formula YR#₃ in which Y is chosen from group 14 of the Periodic Table, and each R# is the same or different and chosen from hydrogen or hydrocarbyl of 1 to 7 carbon atoms,
wherein R³ is H or a substituent on the cyclopentadienyl ring which is proximal to the bridge and positioned vicinal to the distal substituent and is of the formula YR#₃ in which Y is chosen from group 14 of the Periodic Table, and each R# is the same or different and chosen from hydrogen or hydrocarbyl of 1 to 7 carbon atom,
wherein Flu is a fluorenyl group,
wherein each R' is independently selected from a group of formula AR'''₃, in which A is chosen from Group 14 of the Periodic Table, and each R''' is independently hydrogen or a hydrocarbyl having 1 to 20 carbon atoms and wherein the substituents on the fluorenyl form a substitution pattern that lacks bilateral symmetry and m is at least 1;
wherein M is a transition metal Group 4 of the Periodic Table or vanadium;
wherein each Q is hydrocarbyl having 1 to 20 carbon atoms or is a halogen;
wherein R" is a structural bridge imparting stereorigidity to the component

When the cyclopentadienyl is substituted, it is preferably mono- or di-substituted. When it is mono-substituted, the preferred substituent is R¹ located at a position distal to the bridge. When it is di-substituted, the preferred substituents are R¹ and R² located respectively at a position distal to the bridge and at a position proximal to the bridge non-vicinal to the other substituent.

In the distal substituent group R¹, X is preferably C or Si. R* may be a hydrocarbyl such as alkyl, aryl, alkenyl, alkylaryl or aryl alkyl, preferably methyl, ethyl, propyl, isopropyl, butyl, isobutyl, amyl, isoamyl, hexyl, heptyl, octyl, nonyl, decyl, cetyl or phenyl. R¹ may comprise a hydrocarbyl which is attached to a single carbon atom in the cyclopentadienyl ring or may be bonded to two carbon atoms in that ring. Preferably, R¹ is H, or methyl, or t-butyl or Me₃Si, most preferably, R¹ is t-butyl.

The proximal substituent R² is preferably H or Me.

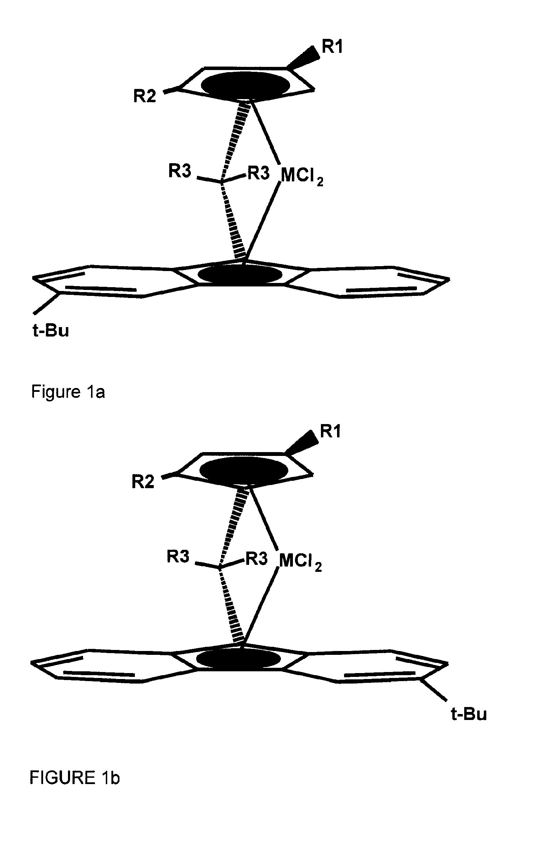

Preferably, there is a substituent on the fluorenyl either at position 3 or at position 6 and any position other than 3 or 6 may be occupied by a substituent. More preferably, there is a single substituent on the fluorenyl, most preferably located at position 6 as represented in Figure 1 a or at position 3, as represented in Figure 1 b.

The structural bridge R" is preferably alkylidene having 1 to 20 aliphatic or aromatic carbon atoms, a dialkyl germanium or silicon or siloxane, alkyl phosphene or amine bridging the two Cp rings. R" is preferably isopropylidene in which the two Cp rings are bridged at position 2 of the isopropylidene or it comprises the moiety TR^{a}R^{b}, in which T is chosen from group 14 of the Periodic Table, and each of R^{a} and R^{b} is independently substituted or unsubstituted phenyl linked to T directly or by C₁-C₄ alkylene. More preferably R" is a diphenyl or a dimethyl bridge.

The metallocene catalyst component according to the present invention may have pseudo-Cs symmetry and be suitable for the production of syndiotactic polyolefins. Alternatively it can have C1 symmetry and be suitable for the preparation of isotactic polymers. The type of symmetry depends upon the position and nature of the substituents on the cyclopentadienyl and on the fluorenyl rings.

Preferably, M is Ti, Zr or Hf, more preferably, it is Zr.

Optionally, the fluorenyl may have additional substitution patterns such as for example additional substituents at positions 2 and/or 7, 4 and/or 5, 1 and/or 8.

The substituents on the cyclopentadienyl play a major role in the polymerisation of ethylene as they favour the response to hydrogen and thus allow to better control the molecular weight and the melt flow of the final resin. They also play an important role in the polymerisation of propylene. No substituents or symmetrically substituted cyclopentadienyl provides syndiotactic polypropylene, whereas lack of bilateral symmetry generates isotactic polypropylene.

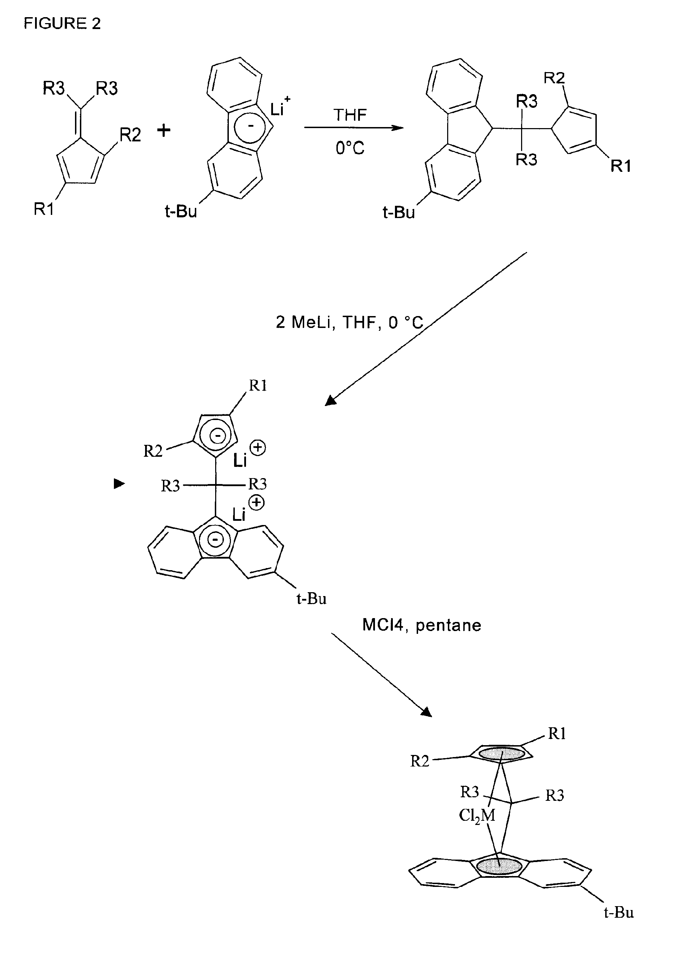

The present invention also discloses a method for preparing the catalyst component described hereabove. The method is described in Alt et al. (Alt H.G., Zenk R., Milius W., in J. Organom. Chem. 514, 257-270, 1996). The preferred scheme according to the present invention is represented in Figure 2.

The method for preparing the catalyst component of the present invention comprises the steps of:
a) reacting a substituted fulvene with an ion pair comprising the substituted fluorenyl anion and a cation in a solvent at a temperature of from - 70 to +70 °C to form a bridged ligand;
b) reacting the bridged ligand obtained in step a) with compound M'R in a solvent at a temperature of from - 70 to +70 °C, wherein M' is Na, K or Li and R is an alkyl having from 1 to 6 carbon atoms;
c) reacting the ion pair obtained in step b) with MX₄ in an inert solvent, wherein X is a halogen or an alkyl having from 1 to 6 carbon atoms and wherein M is a metal group 4 of the periodic table or vanadium, to create the desired catalyst component.

Preferably, all reactions are carried out at a temperature of from -10 to +10 °C, more preferably at a temperature of about 0 °C.

Preferably, the solvent of steps a) and b) is tetrahydrofuran (THF) and that of step c) is pentane.

Preferably M'R is methyl-litium, and preferably X is Cl.

The active catalyst system used for polymerising ethylene comprises the above-described catalyst component and a suitable activating agent having an ionising action.

Suitable activating agents are well known in the art. The activating agent can be an aluminium alkyl represented by formula AIR⁺ₙX₃₋ₙ wherein R⁺ is an alkyl having from 1 to 20 carbon atoms and X is a halogen. The preferred alkylating agents are triisiobutyl aluminium (TIBAL) or triethyl aluminium (TEAL).

Alternatively, an alumoxane can be used as activating agent. The alumoxanes are well known and preferably comprise oligomeric linear and/or cyclic alkyl alumoxanes represented by the formula: 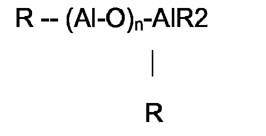 for oligomeric, linear alumoxanes and 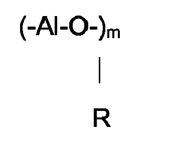 for oligomeric, cyclic alumoxane,
wherein n is 1-40, preferably 10-20, m is 3-40, preferably 3-20 and R is a C₁-C₈ alkyl group and preferably methyl.

Suitable boron-containing activating agents may comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

Optionally, the catalyst component can be supported on a support. Preferred supports include a porous solid support such as talc, inorganic oxides and resinous support materials such as polyolefin. Preferably, the support material is an inorganic oxide in its finely divided form.

Suitable inorganic oxide materials are well known in the art. Preferably, the support is a silica support having a surface area of from 200-700 m²/g and a pore volume of from 0.5-3 ml/g.

The amount of activating agent and catalyst component usefully employed in the preparation of the solid support catalyst can vary over a wide range and depend upon the nature of the activating agent and of the metal. Typically, the ratio AI/M varies from 100 to 2000.

In a preferred embodiment according to the present invention, the support may be an activating support as disclosed in EP-A-906920.

The present invention also discloses a method for homo- or co-polymerising ethylene or alpha-olefins that comprises the steps of:
a) injecting the active catalyst system described hereabove into the reactor;
b) injecting the monomer and an optional comonomer in to the reactor;
c) maintaining under poymerisation conditions;
d) retrieving isotactic poypropylene.

The comonomer can be prepared in situ by adding a suitable oligomerisation catalyst system.

Polymerisation method and conditions are not particularly limited. The catalyst system may be employed in a solution polymerisation process, which is homogeneous, or a slurry process, which is heterogeneous. In a solution process, typical solvents include hydrocarbons with 4 to 7 carbon atoms such as heptane, toluene or cyclohexane. In a slurry process it is necessary to immobilise the catalyst system on an inert support. Polymerisation can be carried out in a single reactor or in two or more serially connected reactors.

Typically, polymerisation of propylene is carried out at a temperature of from 50 to 100 °C, preferably of from 60 to 80 °C. The polymerisation of ethylene can be carried out at a temperature of from 70 to 105 °C, preferably from 70 to 90 °C and under a propylene pressure of from 2 to 20 bars, preferably of from 5 to 10 bars

Alternatively, polymerisation can be carried out under high pressure similarly to the radical induced polymerisation of low density polyethylene (LDPE). The use of the catalyst system according to the present invention allows reducing the high polymerisation pressure typical of the radical-induced polymerisation: It can be reduced from 1000 bars to pressures of the order of 200 bars.

The polyethylene prepared with the catalyst system according to the present invention has a very high molecular weight and a very high melting temperature. Molecular weights are determined by gel permeation chromatography (GPC). Polyethylene prepared with the catalyst system of the present invention cover all density ranges,
- linear low density polyethylene (LLDPE) having a density of from 0.900 to 0.925 g/cm³ and a melt flow index MI2 of from 0.1 to 10 dg/min;
- medium density polyethylene (MDPE) having a density of from 0.930 to 0.935 g/cm³ and a melt flow index MI2 of from 0.1 to 10 dg/min;
- high density polyethylene (HDPE) having a density of from 0.935 to 0.955 g/cm³ and a melt flow index MI2 of from 0.1 to 10 dg/min.

Density is measured following the method of standard test ASTM 1505 at a temperature of 23 °C and melt flow index is measured following the method of standard test ASTM D 1238 under a load of 2.16 kg for MI2 and under a load of 21.6 kg for HLMI, and at a temperature of 190 °C for polyethylene and of 230 °C for polypropylene.

### Examples.

### Example 1.

### Synthesis of the complex PhCH(5-Me-3-t-Bu-Cp)(3-t-Bu-Flu)ZrCl₂

### Step1: Synthesis of 3-tert-butylfluorene (1)

3-t-butylfluorene was prepared according to the procedure disclosed by Alt et al, described in the Journal of Organometallic Chemistry 514 (1996) 257-270.

### Step 2: Synthesis of 6-phenyl-2-methyl-4-tert-butyl-fulvene (3)

To a solution of 3.034 g (22.27 mmol) of 1-methyl-3-tert-butyl-cyclopentadiene (mixture of isomers) in 100 ml of diethyl ether, a 2.5 M solution of 13.9 mL (22.27 mmol) of buthyllithium in hexane was added at a temperature of 0°C. The reaction mixture was stirred for 2 hours and a solution of 2.26 ml (22.27 mmol) of benzaldehyde in 60 ml of ether was added dropwise. The reaction mixture turned orange. After 2 hours 100 ml of a concentrated solution of NH₄Cl was added slowly. This mixture was stirred overnight. The organic layer was separated, dried over MgSO₄ and all the volatiles were removed under vacuum. The orange residue was recrystallised from methanol at a temprarture of -30°C to give compound (3).

### Step 3: Synthesis of 3-tert-butyl-9-[5-methyl-3-tert-butyl-cyclopentadienyl)-phenyl-ethyl]-9H-fluorene (4)

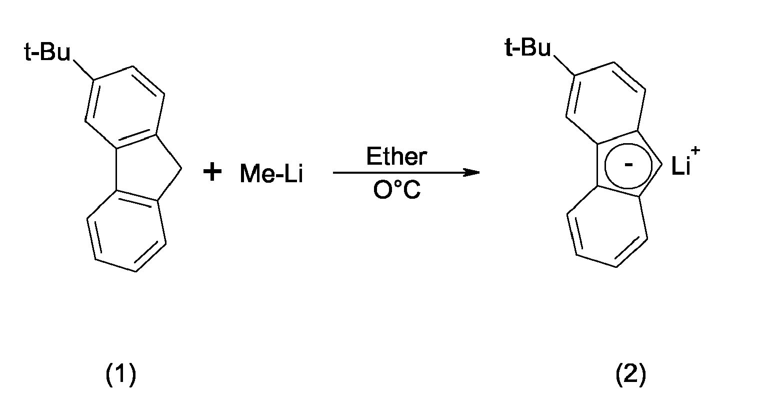

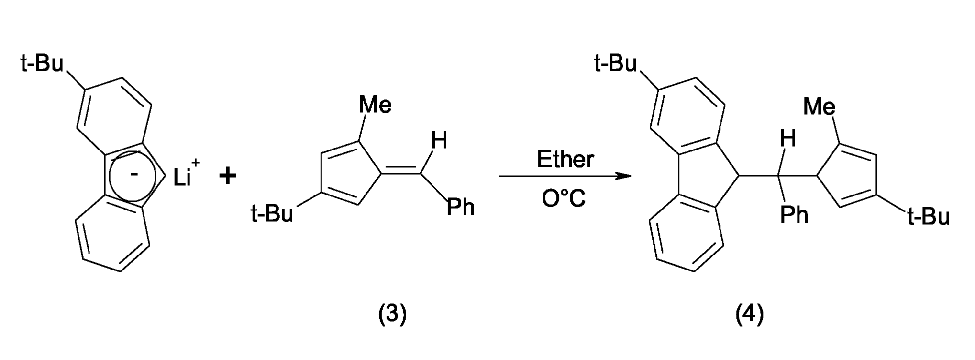

100 ml of 3,6-d-t-Bu-fluorenyl-lithium (2) were prepared from 5.14 g (22.9 mmol) of 3,6-d-t-butyl-fluorene and a 2.5 M solution of 9.16 mL (22.9 mmol) of n-butyl-lithium.To a solution of 5.139 g (22.9 mmol) of complex (3) in 100 ml of ether 100 ml of 3,6-d-t-Bu-fluorenyl-lithium were added at room temperature. The reaction mixture was stirred for 4 hours at ambient temperature (about 25 °C) and then quenched with 50 ml of a saturated solution of NH₄Cl and diluted with 50 ml of diethyl ether. The organic layer was separated, washed with water and dried over MgSO4. All the volatiles were removed under vacuum and the residue was dissolved in hot EtOH. The solution was cooled to a temperature of -20°C and a white yellow precipitate formed. This latter was filtered and washed with cold ethanol at a temperature of - 50°C and dried under vacuum overnight to give 6.5 g (14.55 mmol) of product (4) with a yield of 63.53 %.

### Step 4: Synthesis of the complex PhCH(5-Me-3-t-Bu-Cp)(3-t-Bu-Flu)ZrCl₂ (5)

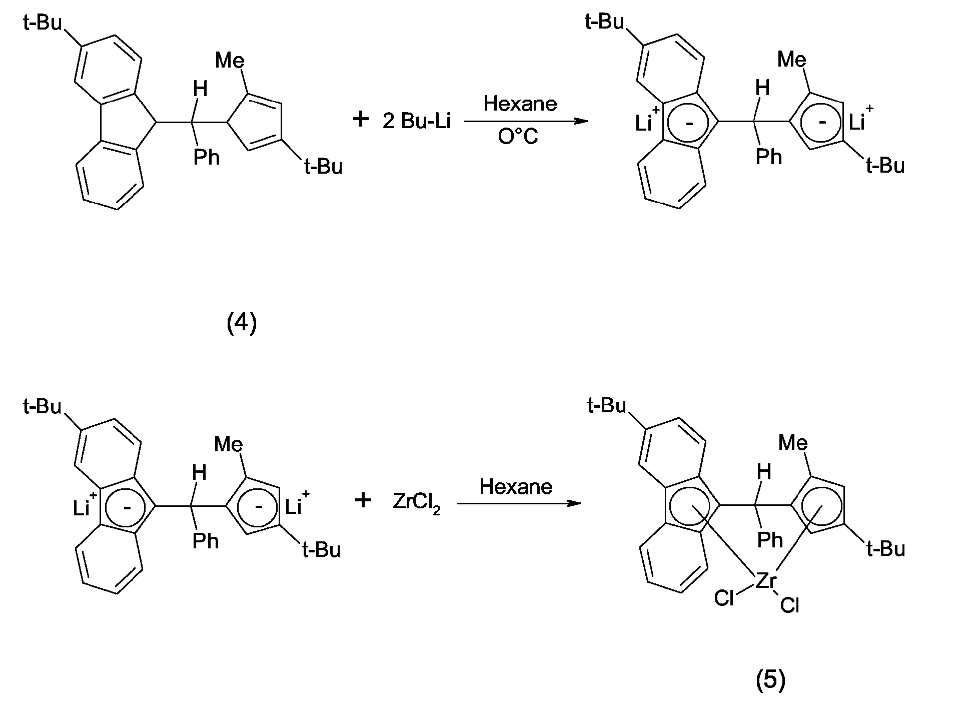

To a solution of 2g (4.5 mmol) of complex (4) in 100 ml of Et₂O was added a 2.5 M solution of 3.6 ml (9 mmol) of butyl-lithium in hexane at a temperature of 0°C. The reaction mixture was stirred for 4 h and 1.0434 g (4.5 mmol) of anhydrous ZrCl₄ were added in a glove-box. This resulted pink reaction mixture was stirred at room temperature overnight. Then the solvent was evaporated under vacuum and 100 ml of hexane were condensed under reduced pressure. The resulting mixture was filtered off. The filtrate was evaporated under vacuum to give 2.39 g (3.9 mmol) of pink powder of crude complex (5) with a yield of 88%.

### Example 2.

### Synthesis of complex Me₂C(Cp)(3-t-Bu-Flu)ZrCl₂

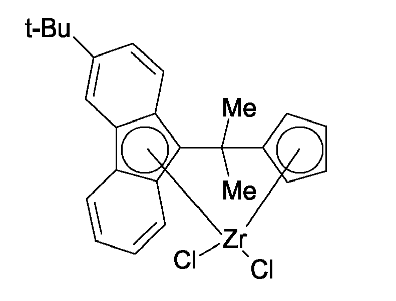

The procedure is the same as in example 1 except that in step 3, complex 3 is replaced by 6,6-dimethylfulvene.

### Example 3

### Synthesis of complex Me₂C(3-Me-Cp)(3-t-Bu-Flu)ZrCl₂

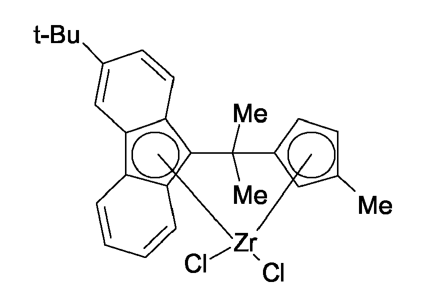

The procedure is the same as in example 1 except that in step 3, complex 3 is replaced by 3,6,6-trimethylfulvene.

### Example 4.

### Synthesis of complex Me₂C(3-t-Bu-Cp)(3-t-Bu-Flu)ZrCl₂

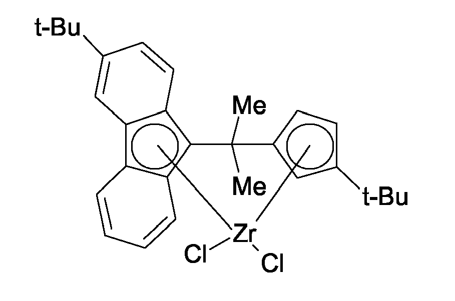

The procedure is the same as in example 1 except that in step 3, complex 3 is replaced by 2-tert-butyl-6,6-dimethylfulvene.

### Example 5.

### Synthesis of complex Ph₂C(Cp)(3-t-Bu-Flu)ZrCl₂

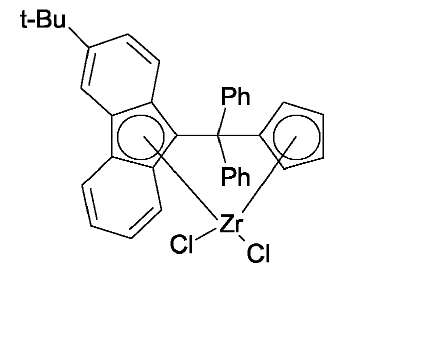

The procedure is the same as in example 1 except that in step 3, complex 3 is replaced by 6,6-diphenylfulvene.

### Example 6.

### Synthesis of complex Me₂C(5-Me-3-t-Bu-Cp)(3-t-Bu-Flu)ZrCl₂

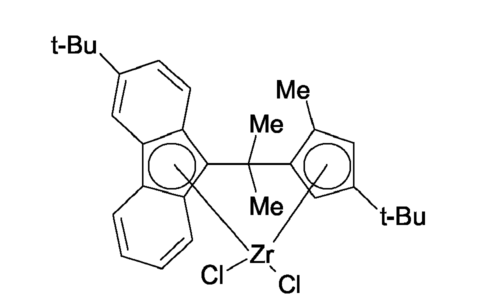

The procedure is the same as in example 1 except that in step 3, complex 3 is replaced by 1,6,6-trimethyl-3-tert-butyl-fulvene.

### Example 7

### Synthesis of complex CH₂(5-Me-3-t-Bu-Cp)(3-t-Bu-Flu)ZrCl₂

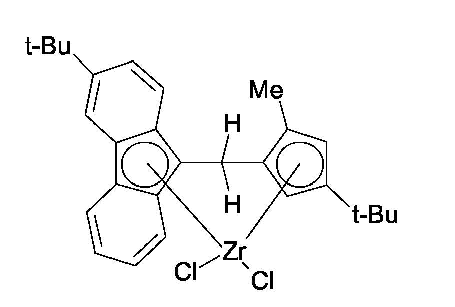

The procedure follows a scheme similar to that developed by Alt et al. (in H.G. Alt and R. Zenk, in Journal of Organometallic Chemistry, 526, 295-301, 1996). To a solution of 1.67 g (3.91 mmol) of 6-dimethylamino-fulvene in 40 ml of Et₂O were added 310 ml (7.82 mmol) of a 2.5 M solution of butyl-lithium in hexane at 0 °C. The reaction mixture was stirred for 4 h and the solvent was evaporated under reduced pressure. Then in a glovebox anhydrous 0.91 g (3.9 mmol) of ZrCl₄ were added followed by theaddition of 50 mL of pentane. The resulting pink reaction mixture was stirred at room temperature overnight. The reaction mixture was then filtered off and the filtrate was evaporated in vacuum. A portion of about 30 mL of hexane was added and the resulting clear solution was kept at a temperature of -30 °C overnight to give a pink microcrystalline powder precipitate of complex CH₂(5-Me-3-t-Bu-Cp)(3-t-Bu-Flu)ZrCl₂. A second batch of the same complex was obtained from the mother liqueur upon cooling. A total amount of 1.48 g (2.52 mmol) of complex wereobtained with a yield of 64 % yield. Crystals, suitable for X-ray analysis, were obtained by slow concentration from a 3:7 mixture of CH₂Cl₂/hexane.

### Polymerisation of propylene.

Several polymerisations have bee carried out with some of these catalyst systems. A first group of polymerisations was carried out in a high-throughput screening reactor with catalyst components supported on silica impregnated with methylaluminoxane. A second group of polymerisations was carried out in a pilot reactor with an homogeneous catalyst system. The first group of polymerisations showed roughly the potential of the catalyst system of the present invention whereas the he second group of polymerisations showed its excellent performance.

Polymerisations in the pilot were all carried according to the following method. The reactor was conditioned at a temperature of 95 °C, under argon and then started in program mode at a temperature of 100 °C. 11.5 mg of the catalyst, in 0.650 mL of an oily solution, were pre-contacted with 19.2 mg of triisobutylaluminium (TIBAL) as cocatalyst, and the optional comonomer and 6.4 mg of TIBAL as scavenger were added. The reactor was brought down to a temperature of 70 °C and the catalyst system was injected into the reactor with the optional hydrogen and with the propylene. The polymerisation was carried out at a temperature of 70 °C, under a pressure of 30 bars, during a period of time of 60 minutes and under stirring at a speed of 675 rotations per minutes. The comonomer was hexene and the amounts of hydrogen and hexene are specified in Tables I to III.

Polymerisation results are also presented in Tables I to III.

Table I describes the properties of isotactic polypropylene obtained respectively with Me₂C(3-t-bu-Cp)(3-t-bu-Flu)ZrCl₂ and with Me₂C(5-Me-3-t-bu-Cp)(3-t-bu-Flu)ZrCl₂. The polymerisation temperature and amount of hydrogen are also displayed in Table I.

**TABLE I.**

| Cata* | Polym. T °C | H2 L | Mn kDa | Mw kDa | D | Tf °C | Tc °C | mmmm |
|---|---|---|---|---|---|---|---|---|
| 1 | 80 | - | 30 | 75 | 2.5 | 148 | 98 | 88 |
| 1 | 60 | - | 90 | 190 | 2.1 | 145 | 96 | 86 |
| 1 | 70 | - | 42 | 93 | 2.2 | 140 | 97 | 84 |
| 1 | 70 | 0.02 | 23 | 52 | 2.3 | 145 | 97 | 86 |
| 2 | 80 | - | 100 | 290 | 2.9 | 153 | 105 | 93 |
| 2 | 60 | - | 135 | 400 | 2.95 | 150 | 103 | 90 |
| 2 | 70 | - | 90 | 325 | 3.6 | 148 | 99 | 89 |
| 2 | 70 | 0.02 | 45 | 140 | 3.1 | 151 | 105 | 90 |

| | | | | | | | | |
|---|---|---|---|---|---|---|---|---|
| * cata 1 = Me₂C(3-t-bu-Cp)(3-t-bu-Flu)ZrCl₂ cata2 = Me₂C(5-Me-3-t-bu-Cp)(3-t-bu-Flu)ZrCl₂ | | | | | | | | |

D represents the polydispersity index defined as the ratio Mw/Mn of the weight number molecular weight Mw over the number average molecular weight Mn. The molecular weights are determined by gel permeation chromatography (GPC).

Table II describes the properties of syndiotactic polypropylene obtained respectively with Me₂C(Cp)(3-t-bu-Flu)ZrCl₂ and with Ph₂C(Cp)(3-t-bu-Flu)ZrCl₂. The polymerisation temperature and amount of hydrogen are also displayed in Table II.

**TABLE II.**

| Cata* | Polym. T °C | H2 L | Mn kDa | Mw kDa | D | Tf °C | rrrr+rrrm |
|---|---|---|---|---|---|---|---|
| 3 | 40 | - | 23 | 55 | 2.4 | 145 | |
| 3 | 60 | - | 40 | 95 | 2.38 | 138 | 87.5 |
| 3 | 70 | - | 30 | 74 | 2.5 | 138 | 87 |
| 3 | 70 | 0.02 | 31 | 77 | 2.48 | 130 | |
| 4 | 40 | - | | | | 148 | |
| 4 | 60 | - | | | | 142 | |
| 4 | 70 | - | 55 | 205 | 3.7 | 139 | |
| 4 | 70 | 0.02 | 95 | 300 | 3.3 | 139 | |

| | | | | | | | |
|---|---|---|---|---|---|---|---|
| * cata3 = Me₂C(Cp)(3-t-bu-Flu)ZrCl₂ cata4 = Ph₂C(Cp)(3-t-bu-Flu)ZrCl₂ | | | | | | | |

It has been observed that for all examples, tacticity does not decrease when the temperature increases contrary to what was observed with other catalytic systems.

The same experiments were carried out on the bench reactor with an homogeneous catalyst system, under similar polymerisation conditions. The results are displayed in **Table III.**

**TABLE III.**

| cata | Polym. T °C | H2 L | Mn kDa | Mw kDa | D | Tf °C | mmmm |
|---|---|---|---|---|---|---|---|
| 1 | 80 | - | 60 | 145 | 2.4 | 153 | 92 |
| 1 | 60 | - | 170 | 380 | 2.23 | 149 | 90 |
| 1 | 70 | - | 75 | 175 | 2.3 | 145 | 91 |
| 1 | 70 | 0.02 | 50 | 105 | 2.1 | 151 | 90 |
| 2 | 80 | - | 195 | 600 | 3.1 | 157 | 97 |
| 2 | 60 | - | 250 | 750 | 3.0 | 155 | 95 |
| 2 | 70 | - | 170 | 600 | 3.52 | 152 | 93 |
| 2 | 80 | 0.02 | 91 | 275 | 3.02 | 156 | 94 |
| 3 | 40 | - | 95 | 225 | 2.4 | 150 | |
| 3 | 60 | - | 81 | 190 | 2.34 | 153 | |
| 3 | 70 | - | 72 | 151 | 2.1 | 152 | |
| 3 | 70 | 0.02 | 63 | 160 | 2.54 | 136 | |
| 4 | 40 | - | 165 | 550 | 3.33 | 152 | |
| 4 | 60 | - | 125 | 455 | 3.64 | 147 | |
| 4 | 70 | - | 111 | 402 | 3.6 | 145 | |
| 4 | 70 | 0.02 | 192 | 610 | 3.2 | 144 | |

Impact copolymers of ethylene-propylene can also be prepared with the catalyst system according to the present invention.

### Polymerisation of ethylene.

Each polymerisation run was performed as described in the following Tables in a 41 autoclave type reactor. In all cases the polymerisation temperature was of 80°C and 2L of isobutane were used as diluent.

It is apparent from Tables IV to VII, that polyethylene products of low density are obtainable according to the invention, especially in the presence of hexene comonomer. The polymers obtained also have a high molecular weight. The new catalyst system according to the present invention is thus very suitable as one component of a dual site catalyst system to prepare bi-modal polyethylene in a single reactor.

Table IV relates to the use of Ph₂C(Cp)(3-t-bu-Flu)ZrCl₂ supported on silica impregnated with methylaluminoxane (MAO), with various amounts of hexene as comonomer and with 0.25 NL of hydrogen.

**TABLE IV.**

| C6/C2 wt % | MI2 dg/m | HLMI dg/m | Density g/cm³ | Mn kDa | Mw kDa | D |
|---|---|---|---|---|---|---|
| 0 | 0.06 | 20.9 | 0.942 | | | |
| 0.41 | too low | 0.32 | 0.914 | | | |
| 0.61 | too low | 0.17 | 0.918 | 76 | 336 | 4.4 |
| 0.81 | too low | 0.36 | 0.912 | 81 | 307 | 3.8 |
| 1.22 | 0.06 | 2.74 | 0.908 | | | |

The same catalyst system was used to polymerise ethylene with hexene as comonomer with a ratio C6/C2 of 0.41 and with various amounts of hydrogen. The results are presented in Table V.

**TABLE V.**

| Hydrogen NL | MI2 dg/m | HLMI dg/m | Density g/cm³ | Mn kDa | Mw kDa | D |
|---|---|---|---|---|---|---|
| 0 | too low | too low | 0.913 | | | |
| 0.25 | too low | 0.32 | 0.914 | | | |
| 1.0 | 0.27 | 9.91 | 0.918 | 39 | 131 | 3.4 |

Table VI relates to the use of Me₂C(3-t-bu-Cp)(3-t-bu-Flu)ZrCl₂ supported on silica impregnated with methylaluminoxane (MAO), with various amounts of hexene as comonomer and with 0.25 NL of hydrogen.

**TABLE VI.**

| C6/C2 % | HLMI dg/m | Density g/cm³ |
|---|---|---|
| 0.0 | too low | 0.930 |
| 0.41^{a} | 0.06 | 0.917 |
| 0.41 | 0.13 | 0.920 |
| 0.61^{a} | 0.03 | 0.913 |
| 0.61 | 0.01 | 0.913 |
| 0.81 | 0.16 | 0.913 |
| 1.22^{a} | 1.2 | 0.910 |
| 1.22 | 1.6 | 0.907 |

| | | |
|---|---|---|
| a: no prepolymerisation was carried out. | | |

## Claims

1. A catalyst system for homo- or co-polymerising ethylene or alpha-olefins comprising
a) a catalyst component of general formula I
R" (CpR¹R² R³)(FluR'ₘ)MQ₂ (I)
wherein Cp is a cyclopentadienyl,
wherein R¹ is H or a substituent on the cyclopentadienyl ring which is distal to the bridge, which distal substituent comprises a group of the formula XR*₃ in which X is chosen from Group 14 of the periodic table, and each R* is the same or different and chosen from hydrogen or hydrocarbyl of from 1 to 20 carbon atoms,
wherein R² is H or a substituent on the cyclopentadienyl ring which is proximal to the bridge and positioned non-vicinal to the distal substituent and is of the formula YR#₃ in which Y is chosen from group 14 of the Periodic Table, and each R# is the same or different and chosen from hydrogen or hydrocarbyl of 1 to 7 carbon atoms,
wherein R³ is H or a substituent on the cyclopentadienyl ring which is proximal to the bridge and positioned vicinal to the distal substituent and is of the formula YR#₃ in which Y is chosen from group 14 of the Periodic Table, and each R# is the same or different and chosen from hydrogen or hydrocarbyl of 1 to 7 carbon atoms,
wherein Flu is a fluorenyl group,
wherein each R' is independently selected from a group of formula AR'''₃, in which A is chosen from Group 14 of the Periodic Table, and each R''' is independently hydrogen or a hydrocarbyl having 1 to 20 carbon atoms and wherein the substituents on the fluorenyl form a substitution pattern that lacks bilateral symmetry, and m is an integer of at least 1;
wherein M is a transition metal Group 4 of the Periodic Table or vanadium;
wherein each Q is hydrocarbyl having 1 to 20 carbon atoms or is a halogen;
wherein R" is a structural bridge imparting stereorigidity to the component.
b) an activating agent having an ionising action or an activating support.

2. The catalyst system of claim 1 wherein R¹ is H, methyl, t-butyl or Me₃Si.

3. The catalyst system of claim 1 or claim 2 wherein R² is H or Me.

4. The catalyst system of any one of claims 1 to 3 wherein R³ is H or Me.

5. The catalyst system of any one of claims 1 to 4 wherein m is 1 and R' is a single substituent at position 3 or at position 6.

6. The catalyst system of claim 5 wherein R' is t-butyl.

7. The catalyst system of any one of 1 to 6 wherein R" is a diphenyl or a dimethyl bridge.

8. The catalyst system according to any one of claims 1 to 7 wherein the activating agent is an aluminoxane or a boron-based compound.

9. The catalyst system according to any one of claims 1 to 7 wherein the activating agent is an activating support.

10. A process for preparing the catalyst system of any one of claims 1 to 10 comprising the steps of:
a. providing a metallocene catalyst component prepared by:
i) reacting a substituted fulvene with an ion pair comprising the substituted fluorenyl anion and a cation in a solvent at a temperature of from - 70 to +70 °C to form a bridged ligand;
ii) reacting the bridged ligand obtained in step a) with compound M'R in a solvent at a temperature of from - 70 to +70 °C, wherein M' is Na, K or Li and R is an alkyl having from 1 to 6 carbon atoms;
iii)reacting the ion pair obtained in step b) with MX₄ in an inert solvent, wherein X is a halogen or an alkyl having from 1 to 6 carbon atoms, to create the desired catalyst component.
b. providing an activating agent having an ionising action.

11. A method for preparing polyethylene or poly-alpha-olefins that comprises the steps of:
a. injecting the active catalyst system of any one of claims 1 to 8 into the reactor;
b. injecting the monomer and an optional comonomer in to the reactor;
c. maintaining under poymerisation conditions;
d. retrieving the polyethylene or poly-alpha-olefin.

12. The method of claim 10 wherein the monomer is ethylene or propylene.
